# EUROPÄISCHE PATENTANMELDUNG

(11) **EP 1 832 401 A1**
(43) Veröffentlichungstag der Anmeldung: **12.09.2007**
(21) Anmeldenummer: 07004831.9
(22) Anmeldetag: 08.03.2007
(51) Int. Cl.: B27B 5/32, B24D 5/16, B23B 31/00, B23B 31/40

(54) **Handarbeitsgerät sowie Scheibe**

(30) Priorität: 11.03.2006 DE 202006003880 U
(71) Anmelder: Berhalter, Eberhard, 88074 Meckenbeuren (DE)
(72) Erfinder: Berhalter, Eberhard, 88074 Meckenbeuren (DE)
(74) Vertreter: Engelhardt, Volker

(57) **Zusammenfassung**

Bei einem Handarbeitsgerät mit einem Antriebsmotor und einem mit diesem trieblich verbundenen Flansch (3), an dem eine Scheibe (5), insbesondere eine Frässcheibe oder ein Sägeblatt, drehfest anbringbar ist und an dem mindestens ein Übertragungskörper (11) angeformt ist, der vom Flansch (3) absteht,soll sowohl die triebliche Wirkverbindung zwischen der Scheibe und dem Flansch zuverlässig und dauerhaft vorhanden als auch die Scheibe auf den Flansch exakt in einer vorgegebenen Position aufsetzbar sein. Diese Aufgabe wird dadurch gelöst, dass die Außenkontur des Übertragungskörpers (11) als Oval oder Ellipse ausgebildet ist und in Umfangsrichtung gekrümmt ist und/oder dass der Übertragungskörper (11) zur Umfangsrichtung geneigt verläuft, dass in die Scheibe (5) mindestens eine in Form eines gekrümmten Langloches ausgestaltete Ausnehmung (12) eingearbeitet ist, deren Innenkontur mit der Außenkontur des Übertragungskörpers (11) korrespondiert, und dass die Positionen des Übertragungskörpers (11) und der jeweiligen Ausnehmung (12) übereinstimmen, und dass im montierten Zustand der Scheibe (5) der Übertragungskörper (11) an dem Flansch (3) formschlüssig in der Ausnehmung (12) der Scheibe (5) abgestützt ist.

## Beschreibung

Die Erfindung bezieht sich auf ein Handarbeitsgerät mit einem Antriebsmotor und einem mit diesem trieblich verbundenen Flansch, an dem eine Scheibe drehfest anbringbar ist sowie auf die Scheibe nach den Oberbegriffen der Patentansprüche 1 bzw. 9.

Solche bekannten Handarbeitsgeräte bestehen üblicherweise aus einer die Scheibe an dem Flansch arretierenden Schraube, die die Scheibe durchgreift und in einer Gewindebohrung, die in dem Flansch eingearbeitet ist, abgestützt wird.

Um die triebliche Wirkverbindung zwischen dem Flansch und der Scheibe zusätzlich abzusichern, sind an dem Flansch ein oder mehrere Stifte angeformt, die formschlüssig in die Scheibe eingearbeiteten runden Ausnehmungen eingreifen. Eine solche Ausgestaltung kann beispielsweise der DE-GM 203 04 448 U1 entnommen werden.

Als nachteilig bei diesen Handarbeitsgeräten hat sich herausgestellt, dass die Scheibe nicht positionsdefiniert auf dem Flansch aufsteckbar ist, denn die Scheibe kann von zwei Seiten aus mit dem Flansch verbunden werden. Insbesondere wenn jedoch in die Scheibe eine konisch verlaufende Bohrung eingearbeitet ist, in die die Schraube zur Fixierung der Scheibe an dem Flansch eingesteckt wird, ist es erforderlich, dass die Scheibe mit der entsprechenden Seite an dem Flansch befestigt wird, denn anderenfalls verläuft die konische Bohrung in umgekehrter Richtung und die Schraube steht aus der Ebene, die von der Scheibe gebildet wird, ab. Folglich wird die Scheibe durch die Schraube nicht optimal an dem Flansch gehalten, da diese in die konische Durchgangsöffnung nicht vollständig eintaucht und die Schraube behindert den Einsatz des Handarbeitsgerätes, denn diese ragt aus der von der Scheibe gebildeten Ebene.

Des Weiteren sind die den jeweiligen Stift aufnehmenden Ausnehmungen im Durchmesser wesentlich größer zu bemessen als die Außendurchmesser der Stifte, denn die Positionierung der Stifte an den Flansch unterliegt gewissen Fertigungsungenauigkeiten. Diese Fehlertoleranzen führen dazu, dass die Ausnehmungen größer bemessen werden als die Stifte, um einen Toleranzaugleich zu schaffen. Während des Betriebes der Scheibe, vor allem beim An- und Ausschalten des Handarbeitsgerätes, treten folglich, um das Spiel zu überwinden Schläge auf. Die auf die Stifte einwirkenden Scherkräfte können dabei bewirken, dass die Stifte brechen, wodurch das Handarbeitsgerät ausfällt und repariert werden muss.

Es ist daher Aufgabe der Erfindung, ein Handarbeitsgerät der eingangs genannten Gattung derart weiterzubilden, dass sowohl die triebliche Wirkverbindung zwischen der Scheibe und dem Flansch zuverlässig und dauerhaft vorhanden als auch die Scheibe auf den Flansch exakt in einer vorgegebenen Position aufsetzbar ist.

Diese Aufgabe wird erfindungsgemäß durch die Merkmale der kennzeichnenden Teile der Patentansprüche 1 und 9 gelöst.

Weitere vorteilhafte Weiterbildungen der Erfindung ergeben sich aus den Unteransprüchen.

Wenn an dem Flansch ein oval, elliptisch oder backenförmig ausgebildeter Übertragungskörper vorgesehen ist, der in Bezug auf die Umfangsrichtung der Scheibe geneigt verläuft, wird gewährleistet, dass die Scheibe lediglich von einer einzigen vorgegebenen Seite auf den Flansch aufgesteckt werden kann, denn nur in dieser Position korrespondieren die in der Scheibe eingearbeiteten Ausnehmungen bzw. Langlöcher mit der Position des oder der Übertragungskörper. Folglich kann die Scheibe ausschließlich von einer bestimmten Seite auf den Flansch aufgesetzt werden.

Dadurch, dass die Ausnehmungen als Langlöcher ausgebildet sind, liegen die Übertragungskörper im Bereich der Kraftübertragung zwischen diesen und den Ausnehmungen spielfrei an und das Drehmoment des Flansches wird optimal übertragen, ohne dass schlagartige Beanspruchungen oder dadurch hervorgerufene Spitzenwerte von Scherkräften entstehen. Darüber hinaus wird die zur Verfügung stehende Oberfläche, auf die die Drehmomente einwirken, erheblich vergrößert, denn durch die geneigte Positionierung in Bezug auf die Drehrichtung wird die für die Kraftübertragung beanspruchte Oberfläche vergrößert.

In der Zeichnung ist ein erfindungsgemäß Ausführungsbeispiel dargestellt, das nachfolgend näher erläutert wird. Im Einzelnen zeigt:
- Figur 1: ein Handarbeitsgerät mit einem Antriebsmotor, der trieblich mit einem aus dem Handarbeitsgerät abstehenden Flansch verbunden ist, an dem über eine Schraube eine Scheibe befestigt ist, in Seitenansicht,
- Figur 2: das Handarbeitsgerät gemäß Figur 1, in Ansicht von unten,
- Figur 3: den Flansch des Handarbeitsgeräts gemäß Figur 1, mit zwei an diesen angeformten oval ausgebildeten Übertragungskörpern und der Scheibe mit zwei ovalen Ausnehmungen, in perspektivischer Ansicht, und
- Figur 4: die Übertragungskörper gemäß Figur 3 im eingesetzten Zustand der Scheibe, mit einer verzahnten Außenkontur, in Draufsicht.

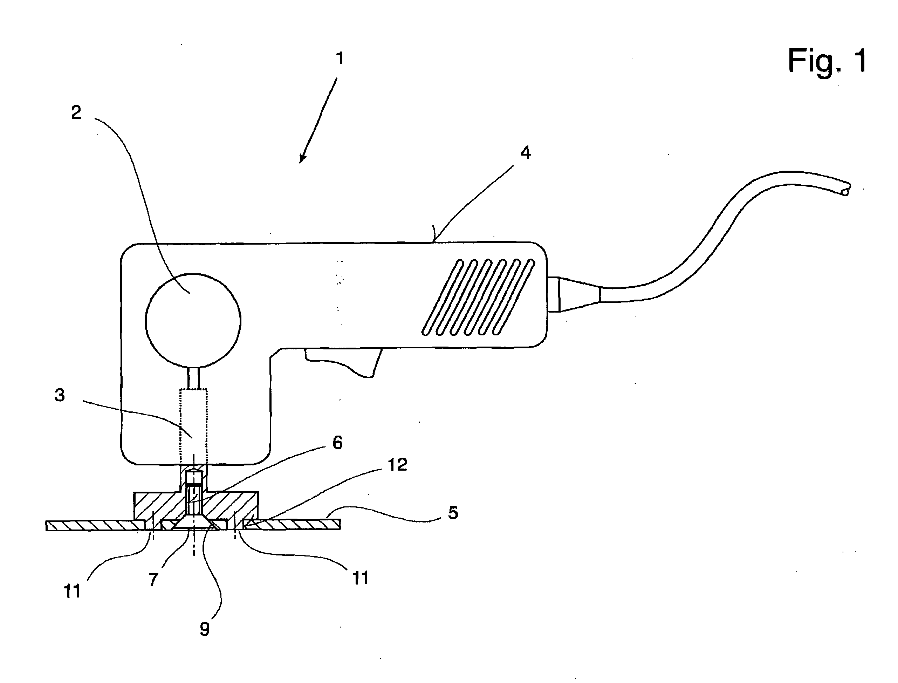

In Figur 1 ist ein Handarbeitsgerät 1 mit einem Antriebsmotor 2 und einem mit diesem trieblich verbundenen Flansch 3 dargestellt, das beispielsweise zum Durchtrennen von Holzplatten mittels eines Sägeblattes oder zum Durchschneiden bzw. -trennen von metallischen Bauteilen geeignet ist. Für derartige Bearbeitungsvorgänge wird eine Frässcheibe 5 an dem Flansch 3 drehfest angebracht, so dass das vom Antriebsmotor 2 erzeugte Drehmoment über den Flansch 3 auf die Scheibe 5 übertragen wird.

Zur Befestigung der Scheibe 5 an dem Flansch 3 ist eine Schraube 7 vorgesehen, die eine in die Scheibe 5 eingearbeitete Durchgangsbohrung 9 durchgreift und in einer in dem Flansch 3 vorgesehenen Gewindebohrung 6 eingedreht ist. Die Durchgangsbohrung 9 ist konisch verjüngend in Richtung des Antriebsmotors 2 ausgebildet, so dass die Schraube 7 vollständig in die Durchgangsbohrung 9 eintaucht und somit aus der von der Scheibe 5 gebildeten Ebene nicht absteht.

Um das vom Antriebsmotor 2 erzeugte Drehmoment optimal über den Flansch 3 auf die Scheibe 5 zu übertragen, sind an dem Flansch 3 zwei Übertragungskörper 11 angeformt. Üblicherweise werden die Übertragungskörper 11 mittels eines Fräsers aus dem Vollen des Flansches 3 herausgearbeitet. Die Übertragungskörper 11 sind in jeweils einer in die Scheibe 5 eingearbeiteten Ausnehmungen 12, das als Langloch ausgestaltet ist, eingesteckt und in diesen, zumindest in Drehrichtung 8 des Antriebsmotors 2, formschlüssig gehalten, so dass die Übertragungskörper 11 spielfrei in der jeweiligen Ausnehmung 12 anliegen.

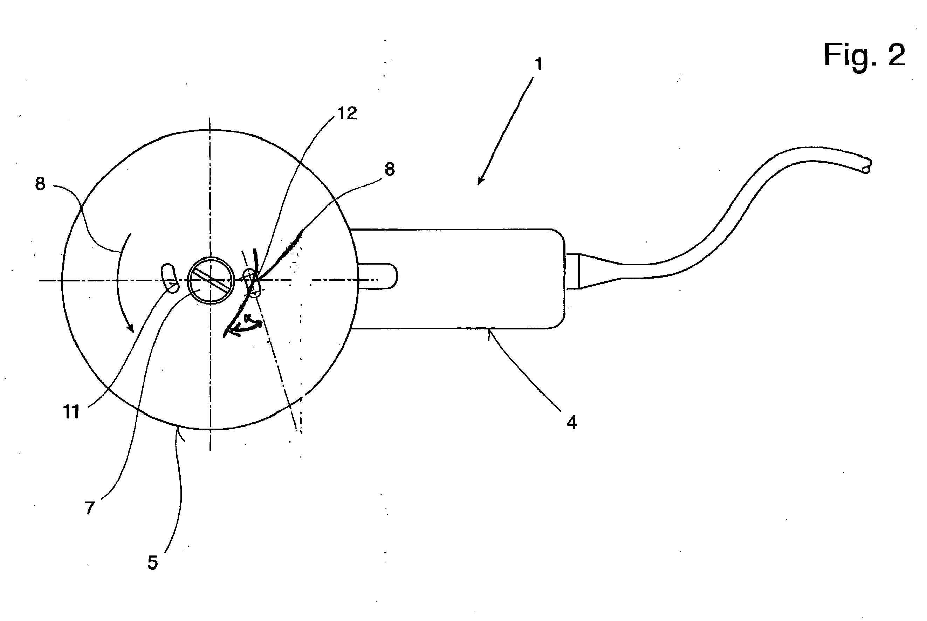

Figur 2 kann entnommen werden, dass die Übertragungskörper 11 eine oval gestaltete Außenkontur aufweisen, die in die Drehrichtung 8 des Antriebsmotors 2 geneigt verlaufend ausgerichtet sind, die demnach bezogen auf die Drehrichtung 8 in Richtung des Zentrums der Schraube 5 weisen. Somit verläuft die Symmetrieachse in Längsrichtung des Übertragungskörpers 11 in einem Winkel α bezogen auf die Dreh- bzw. Umfangsrichtung 8 der Scheibe 5.

Die Innenkonturen der Ausnehmungen 12 der Scheibe 5 korrespondieren mit der Außenkontur des jeweiligen Übertragungskörpers 11, so dass zumindest in Drehrichtung 8 der Scheibe 5 kein Spiel zwischen dem Übertragungskörper 11 und der Ausnehmung 12 vorhanden ist. Die Ausnehmung 12 ist demnach in Form eines Langloches, das zu der Drehrichtung 8 der Scheibe 5 an dem Winkel α geneigt verlaufend ausgerichtet ist, ausgebildet Diese Formgestaltung entspricht dabei einer nierenförmigen Innenkontur, deren Anschlagfläche, die mit dem jeweiligen Übertragungskörper 11 zusammenwirkt und im Vergleich mit einer runden Mitnahmebohrung vergrößert ist. Folglich wird das zu übertragende Drehmoment auf einer größeren Fläche verteilt als bei runden Ausnehmungen.

Darüber hinaus hat die Anordnung bzw- Position der Übertragungskörper 11 sowie deren Außenkonturgestaltung den erheblichen Vorteil, dass die Scheibe 5 lediglich von einer Seite auf den Flansch 3 aufgesteckt werden kann, nämlich exakt derart, dass die konisch verlaufende Durchgangsbohrung 9 in Richtung des Antriebsmotors 2 ausgerichtet ist. Eine umgekehrte Montage der Scheibe 5 an den Flansch 3 ist nicht möglich, denn in einer solchen Position stimmen die Ausrichtungen der Übertragungskörper 11 mit den in die Scheibe 5 eingearbeiteten Ausnehmungen 12 nicht überein, so dass die Scheibe 5 nicht auf den Flansch 3 aufgesteckt werden kann. Die Position der jeweiligen Ausnehmung 12 ist demnach an die Lage und Ausrichtung des jeweiligen Übertragungskörpers 11 angepasst.

Die Übertragungskörper 11 bilden mit der Scheibe 5 und der Schraube 7 eine gemeinsame Ebene, so dass eine platzsparende Befestigung vorliegt.

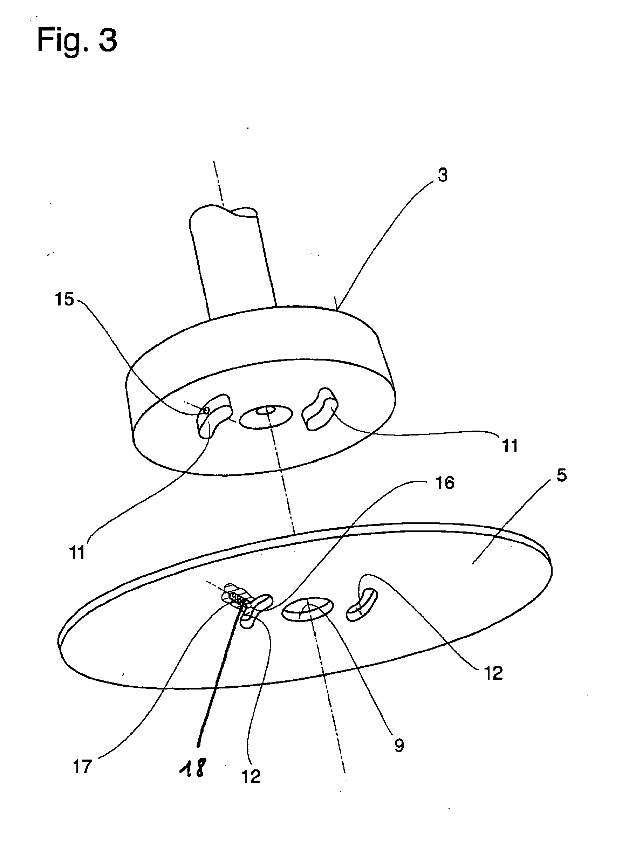

In Figur 3 wird gezeigt, dass unter Umständen auf die Schraube 7 verzichtet werden kann, wenn nämlich den Ausnehmungen 12 eine Federraste 17 in der Scheibe 5 zugeordnet ist, der in eine in der Scheibe 5 eingearbeitete Öffnung 16 eingesetzt ist. Die Öffnung 16 verläuft dabei etwa senkrecht zu der Ausnehmung 12 und der Federstift 17 ragt in einen Teilbereich der Ausnehmung 12. In den Übertragungskörper 11 ist eine Rundung 15 eingearbeitet, in die die Federraste 17 im montierten Zustand eingreift.

Jeder Ausnehmung 12 kann eine solche Federraste zugeordnet werden, so dass die Scheibe 5 durch die Federrasten 17, die Scheibe 5 am Flansch 3 arretiert ist. Der Federraste 17 ist daher zusammen mit der Rundung 15 als Schnellspanneinrichtung ausgebildet.

Eine andersartige Ausbildung der Schnellspanneinrichtung kann auch dadurch entstehen, dass die Übertragungskörper 11 in ihrem Querschnitt schwalbenschwanzförmig gestaltet sind und die Innenkonturen der jeweiligen Ausnehmung 12 in die derart geschaffene Schwalbenschwanzführung einsetzbar und durch diese abgestützt ist.

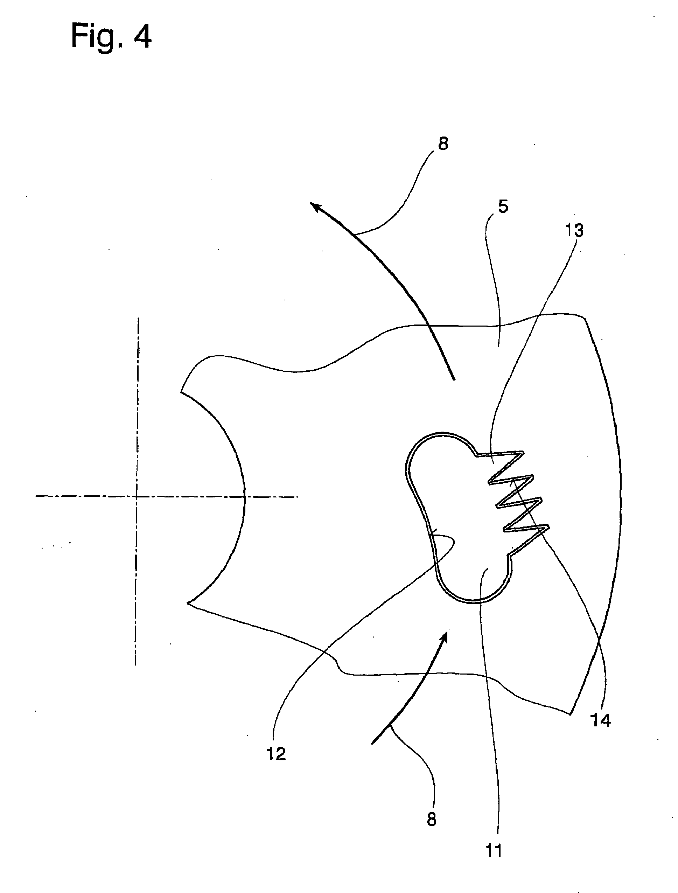

Figur 4 kann entnommen werden, dass auf der dem Mittelpunkt der Scheibe 5 abgewandten Oberfläche der Übertragungskörper 11 vier Zahnflanken 13 angeformt sind. Korrespondierend zu den Zahnflanken 13 sind in die Scheibe 5 vier Kerben 14 eingeformt. Folglich liegen die Zahnflanken 13 in der jeweiligen Kerbe 14 an, wodurch die Übertragungsfläche zwischen dem Übertragungskörper 11 und der Scheibe 15 vergrößert ist. Somit wird das in Drehrichtung 8 wirkende Drehmoment des Antriebsmotors 2 zusätzlich von den Zahnflanken 13 auf die Kerben 14 übertragen.

## Patentansprüche

1. Handarbeitsgerät (1) mit einem Antriebsmotor (2) und einem mit diesem trieblich verbundenen Flansch (3), an dem eine Scheibe (5), insbesondere eine Frässcheibe oder eine Trennscheibe, drehfest anbringbar und an dem mindestens ein Übertragungskörper (11) angeformt ist, der von dem Flansch (3) absteht,
**dadurch gekennzeichnet,**
**dass** die Außenkontur des Übertragungskörpers (11) als Oval oder als Ellipse ausgebildet und in Umfangsrichtung der Scheibe (5) gekrümmt ist und/oder dass der Übertragungskörper (11) zur Umfangsrichtung der Scheibe (5) geneigt verläuft, dass in die Scheibe (5) mindestens eine in Form eines Langloches ausgestaltete Ausnehmung (12) eingearbeitet ist, deren Innenkontur mit der Außenkontur des Übertragungskörpers (11) korrespondiert, dass die Position des Übertragungskörpers (11) mit der jeweiligen Position der Ausnehmung (12) übereinstimmt, und dass im montierten Zustand der Scheibe (5) der Übertragungskörper (11) des Flansches (3) formschlüssig an der Innenkontur der Ausnehmung (12) der Scheibe (5) abgestützt ist.

2. Handarbeitsgerät nach Anspruch 1,
**dadurch gekennzeichnet,**
**dass** der Übertragungskörper (11) zu der Drehrichtung (8) des Antriebsmotors (2) geneigt verlaufend, vorzugsweise radial in Richtung des Zentrums der Scheibe (5) weisend, ausgerichtet ist.

3. **Handarbeitsgerät nach Anspruch 1 oder 2,**
**dadurch gekennzeichnet,**
**dass** die Außenkontur des Übertragungskörpers (11) eine oder mehrere Zahnflanken (13) aufweist, die ,bezogen auf die Drehachse der Scheibe (5), auf der Außenseite des Übertragungskörpers (11) angeordnet sind, und dass in die Ausnehmung (12) der Scheibe (5) eine oder mehrere Kerben (14) eingearbeitet sind, in die die jeweilige Zahnflanke (13) des Übertragungskörpers (11): eingreift.

4. Handarbeitsgerät nach einem oder mehreren der vorgenannten Ansprüche,
**dadurch gekennzeichnet,**
**dass** die Übertragungskörper (11) auf dem Flansch (3) derart ausgerichtet sind, dass die Scheibe (5) von ausschließlich einer Seite auf den oder die Übertragungskörper (11) aufsteckbar ist.

5. Handarbeitsgeräte nach einem oder mehreren
der vorgenannten Ansprüche,
**dadurch gekennzeichnet,**
**dass** in die Scheibe (5) eine sich in Richtung des Antriebsmotors (2) konisch verjüngend verlaufende Durchgangsbohrung (9) eingearbeitet ist, durch die eine Schraube (7) durchsteckbar ist, und dass die Schraube (7) in einer, in dem Flansch (3) eingearbeiteten Gewindebohrung (6) einschraubbar ist.

6. Handarbeitsgerät nach Anspruch 5,
**dadurch gekennzeichnet,**
**dass** der Kopf der Schraube (7) in der sich konisch verjüngenden Durchgangsbohrung (9) der Scheibe (5) angeordnet ist und dass die freien Enden der Übertragungskörpern (11) und der Schraube (7) in den durch die Scheibe (5) vorgegebenen Ebene verlaufen.

7. Handarbeitsgerät nach einem oder mehreren der vorgenannten Ansprüche,
**dadurch gekennzeichnet,**
**dass** in mindestens einen der Übertragungskörper (11) eine Öffnung (18) eingearbeitet ist, in die eine an der Innenseite der Ausnehmung (12) angeordnete Haltenase in Form eines Federstiftes eingreift und durch den die Scheibe (5) an dem Flansch (3) lösbar arretierbar ist.

8. Handarbeitsgerät nach einem oder mehreren der vorgenannten Ansprüche;
**dadurch gekennzeichnet,**
**dass** der oder die Übertragungskörper (11) im Querschnitt schwalbenschwanzförmig ausgebildet ist und dass die Innenkontur der Ausnehmung (12) in die derart gebildete Schwalbenschwanzführung des Übertragungskörpers (11) für ein Handarbeitsgerät (1) einsetzbar und durch diese abstützbar ist.

9. Scheibe (5) als Werkzeug für ein Handarbeitsgerät (1), insbesondere nach einem oder mehreren der vorgenannten Ansprüche, in die eine sich in Richtung des Handarbeitsgerätes (1) konisch verjüngende Durchgangsbohrung (9) eingearbeitet und in der mindestens eine Ausnehmung (12) vorgesehen ist, in der ein mit dem Handarbeitsgerät (1) verbundener Übertragungskörper (11) abstützbar ist,
**dadurch gekennzeichnet,**
**dass** die Innenkontur der Ausnehmung (12) oval oder eiliptisch,vorzugsweise in Form eines Langlochs, ausgestaltet ist und dass die Ausnehmung (12) zur Drehrichtung (8) der Scheibe (5) geneigt verlaufend ausgerichtet ist.
